# EUROPEAN PATENT SPECIFICATION

(11) **EP 4 666 828 B1**
(45) Date of publication and mention of the grant of the patent: **26.08.2026**
(21) Application number: 24183054.6
(22) Date of filing: 19.06.2024
(51) Int. Cl.: A01D 34/00, A01D 43/10, A01D 75/18, A01D 34/82

(54) **ASSEMBLY AND METHOD FOR DETECTING A TOOL CONDITION OF A WORKING TOOL OF AN AGRICULTURAL PLANT CUTTING MACHINE, AND AGRICULTURAL PLANT CUTTING MACHINE**
ANORDNUNG UND VERFAHREN ZUM ERFASSEN EINES WERKZEUGZUSTANDS EINES ARBEITSWERKZEUGS EINER LANDWIRTSCHAFTLICHEN PFLANZENSCHNEIDEMASCHINE SOWIE LANDWIRTSCHAFTLICHE PFLANZENSCHNEIDEMASCHINE
ENSEMBLE ET PROCÉDÉ DE DÉTECTION D'UN ÉTAT D'OUTIL D'UN OUTIL DE TRAVAIL D'UNE MACHINE DE COUPE DE PLANTE AGRICOLE, ET MACHINE DE COUPE DE PLANTE AGRICOLE

(43) Date of publication of application: 24.12.2025
(73) Proprietor: Kverneland Group Kerteminde AS, 5300 Kerteminde (DK)
(72) Inventor: BUCH ANDERSEN, Thomas, 5300 Kerteminde (DK); BUCH ANDERSEN, Rasmus, 5300 Kerteminde (DK)
(74) Representative: Bittner, Thomas L.

(56) References cited:
- DE-A1- 102011 117 258
- US-A1- 2014 116 017
- US-A1- 2018 263 181
- US-A1- 2020 209 052

## Description

The present disclosure refers to an assembly and a method for detecting a tool condition of a working tool of an agricultural plant cutting machine, and a plant cutting machine.

### Background

For plant cutting such as cutting of crop or grass agricultural plant cutting machines are provided with one or more working tools configured for cutting plants. With respect to agricultural plant cutting machines for cutting grass such as mowers, one or more working tools configured for conditioning the cut plant material may be provided. The working tool(s) for plant cutting may be provided in a cutting unit of the agricultural plant cutting machine. The working tool(s) for conditioning cut plant material may be provided in a conditioner unit of the agricultural plant cutting machine.

With respect to the working tool of the agricultural plant cutting machine, it has been proposed to detect sensor signals for the working tool in operation, specifically for detecting potential damage to the working tool.

Document US 8, 800, 253 B2 discloses a control system for an implement such as mower having a rotary blade driven by a gear box which is driven by a PTO (Power Take-Off) shaft of a vehicle which is coupled to the mower. The vehicle has a drivetrain which drives the PTO shaft. The control system includes an acceleration sensor for sensing vibrations of the blade and generating a blade vibration signal. A PTO speed sensor generates a PTO shaft speed signal. A control unit is connected to the sensors and to the drivetrain. The control unit generates, as a function of the speed signal, an expected acceleration value representing a blade loss condition and an expected acceleration value range. The control unit compares the vibration signal to the range, and the control unit stops the drivetrain from rotating the blade if the vibration signal is within the range.

Document US 8,353,200 B2 refers to an arrangement for detection of the sharpness of chopper knives that can be moved relative to a shear bar. The arrangement includes a sensor that detects the effective cutting forces directly or indirectly and an evaluation arrangement connected to the sensor. The evaluation arrangement integrates the measured values of the sensor over time in order to generate information concerning the sharpness of the chopper knives.

Document US 7,973,654 B3 discloses a system and method for detecting impending failure of a component of a disk cutterhead of a cutterbar of a plant cutting machine. The components will generate at least one indicator of an impending failure thereof, utilizing a plurality of sensor distributed among the cutterheads, each of the sensors being configured and operable for sensing at least one of the indicators of impending failure and outputting signals representative thereof to a controller automatically operable for processing the signals, to enable identifying an individual location or one of the cutterheads in which an impending failure of one or more of the components is present, and outputting a signal representative thereof to a warning device. The indicators can include temperature, sound, and vibration. The controller is also operable for determining comparative threshold values for the indicators, to adapt to changing conditions and norms.

Document DE 10 2011 117 258 A1 discloses a mower comprising working tools rotating in operation. A knife braking or separating from the working tool is detected by detecting vibrations of a vibration rode provided on a support element of the agricultural machine.

Document US 2020 / 0209 052 A1 discloses a mower unit provided in a grass mower, the mower unit including a mower deck having a top plate and a side plate extending downwards from the top plate, a rotational shaft extending through the top plate and rotatably supported to the top plate, and a blade attached to the rotational shaft inside the mower deck. A vibration detection unit is attached to the mower deck for detecting vibration in the mower deck. Vibration detected by the vibration detection unit is informed via an informing unit.

Document US 2018 / 0263181 A1 refers to a robotic work tool comprising a work tool, a tool damage detector and a controller for controlling the operation of the robotic work tool, the robotic work tool being configured to detect that the work tool is damaged or lost by detecting an irregularity utilizing the tool damage detector and thereby determining that the work tool is damaged or lost.

### Summary

It is an object to provide an assembly and a method for detecting a tool condition of a working tool of an agricultural plant cutting machine, and an agricultural plant cutting machine allowing for efficiently and reliably determining a tool condition of the rotatable working tool of the agricultural plant cutting machine. Specially, it is an object to detect potential wearing of the working tool in operation.

For solving the object, an assembly and a method for detecting a tool condition for a working tool of an agricultural plant cutting machine according to the independent claims 1 and 12, respectively, are provided. Further, an agricultural plant cutting machine according to claim 11 is provided. Additional aspects are disclosed in the dependent claims.

The assembly and the method provide for efficiently observing and detecting sensor signals identifying loss of mass for the working tool in operation of the agricultural plant cutting machine. The loss of mass of the working tool is identifying potential change of the condition or status of the working tool, for example, compared to some original condition of the working tool when the working tool is firstly placed in the assembly. Loss of mass may be indicative of potential wearing of the working tool because of applying the working tool for plant cutting. For example, the agricultural plant cutting machine may be configured to cutting grass and / or conditioning cut grass material, thereby, being an agricultural mower which optionally may be provided with a conditioning unit in addition. With respect to the different types of plant cutting machine, the working tool is rotated for plant cutting in operation. For example, the working tool may comprise a cutting disk or some other knife or blade for plant cutting.

The controller may be automatically operable to receive reference sensor signals identifying sensor signals for the working tool with one of no loss of mass and previous loss of mass, and to compare the sensor signals to the reference sensor signals. Reference sensor signals may be detected in a non-cutting operation of the working tools, wherein the working tools are rotated, but no plants are cut. Alternatively, reference sensor signals may be detected in a cutting operation of the working tools. The reference sensor signals are identifying a condition or status of the working tool with respect to loss of mass to which (current or present) sensor signals are compared for determining (current or present) tool condition or status with regard to loss of mass. The reference sensor signals, for example, may be identifying sensor signals for the working tool with no loss of mass, thereby, for example, identifying in new or unused working tool condition. In another example, the reference sensor signals are identifying sensor signals for the working tool with known or defined previous loss of mass, thereby, providing for a reference with regard to further or additional loss of mass identified by the (current or present) sensor signals.

The sensor may be operable for detecting sensor signals comprising a vibration pattern identifying loss of mass for the working tool. The vibration pattern or spectrum may be detected by one or more sensors, e.g. received on the tool carrier element. In some embodiment, he tool carrier element may be provided with a cutterbar. Different types of sensors configured to the detect vibration signals are known as such. For example, the sensor may comprise an accelerometer.

For processing the sensor signals, the controller may be automatically operable to receive reference sensor signals comprising reference vibration pattern identifying sensor signals with no loss of mass for the working tool, and to compare the sensor signals comprising the vibration pattern to the reference sensor signals comprising the reference vibration pattern for identifying the loss of mass the working tool. With respect to the reference vibration patterns, the aspects outlined above with regard to the reference sensor signals apply *mutatis mutandis.* In an embodiment, the reference vibration pattern may be identifying vibration pattern for the working tool with known or defined previous loss of mass, thereby, providing for a reference with regard to further or additional loss of mass identified by the (current or present) sensor signals.

For processing the sensor signals, the controller may be automatically operable to determine at least one of a root-mean-square value of the vibration pattern and a reference root-mean-square value of the reference vibration pattern; and determine the loss of mass from analyzing at least one of the root-mean-square value of the vibration pattern, and the reference root-mean-square value of the reference vibration patterns. The root-mean-square value (RMS) of a vibration signal can be calculated by squaring each value, finding the arithmetic mean of both squared values, and taking the square root of the result. It may be considered as representing and average "power" of a signal. The RMS value is related to the signal amplitude.

In addition or as an alternative, the controller may be automatically operable to determine a vibration amplitude value from the vibration pattern. For example, some Fourier analysis such as Fast-Fourier-Transformation may be applied in signal processing. For processing the sensor signals, the controller may be automatically operable to determine at least one of a vibration amplitude value from the vibration pattern and a reference vibration amplitude value from the reference vibration pattern; and determine the loss of mass from analyzing at least one of the vibration amplitude value, and the reference vibration amplitude value.

The sensor may be configured for detecting sensor signals vibration pattern for at least one of the tool carrier element, and the working tool. The vibrations detected by the one or more sensors are triggered by rotation of the working tool in operation. Vibration signals may be detected for both the working tool and the tool carrier element holding the working tool, or for only one the two. For this or other embodiments, the one or more sensors may be provided in the vicinity of a mounting location where the working tool is mounted or attached to the tool carrier element which may be provided with a cutterbar.

For processing the sensor signals, the controller is automatically operable to determine a wearing condition of the working tool, the wearing condition being caused by or the result of wearing of the working tool due to operation for at least one of cutting of plants and conditioning of cut plant material. The loss of mass detected for the working tool may be identifying wearing of the working tool because of applying the working tool for plant cutting, thereby, causing friction resulting in loss of mass for the working tool. Additional wearing may be due to the working tool hitting some obstacle in operation on the field. For example, the wearing condition may be determined if continuous loss of mass is identified by the sensor signals over time. Such continuous loss of mass may be distinguished from other types of signal change such as signal change because of at least one of break of the working tool and separation of the working tool from the tool carrier element. In this case, rather some abrupt loss of mass may be indicated by the sensor signals (abrupt change of sensor signal).

The sensor may be operable for detecting the sensor signals during a non-cutting operation or condition of the working tool. In an non-cutting operation / condition such as headland operation the working tool of the agricultural plant cutting machine will be in a non-cutting condition or status. Thus, sensor signals detected during non-cutting operation will not be interfered or disturbed by potentially interfering or noise signals. The controller may be operable for triggering detection of the sensor signals by the one or more sensors in the non-cutting operation. As an option, detecting sensor signals may be prevented if the working tool is operated for plant cutting. Whether the agricultural plant cutting machine is in a non-cutting operation and / or a cutting operation may be detected automatically by a machine control system to which the controller is functionally connected for data or signals transfer. The machine control system for which different embodiments are known as may be implemented on at least one of a tractor and an implement. For example, a lifted position of the tool carrier element detected by the machine control system may be identifying non-cutting operation or status such as headland operation.

For processing the sensor signals, the controller is automatically operable to determine a loss of mass value or range identifying an amount of loss of mass for the working tool. At least one of a relative and an absolute loss of mass value or range of values may be determined, specifically by comparing (current or present) sensor signals to reference sensor signals. With respect to this embodiment or others, a threshold value for loss of mass may be provided to the controller. If the loss of mass identified by the sensor signals is reaching or crossing the threshold value, a warning signal may be generated by the controller and output by the output device, thereby, informing an operator visually and / or acoustically about the warning status or condition. The warning signal may identify need or recommendation for replacement of the working tool by a new working tool to the user or operator.

In addition or as an alternative, a driving device configured to rotate the working tool in operation may be stopped from rotating the working tool and / or prevented from restarting for rotating the working tool, if the loss of mass identified by the sensor signals is reaching or crossing the threshold value.

It may be provided, that a rotational speed (rpm) for the working tool is reduced and / or limited in response to determining the loss of mass identified by the sensor signals is reaching or crossing the threshold value. The controller my generate control signals transmitted to the machine control system for controlling operation of the driving device accordingly.

In some embodiment, a remaining life cycle for the working tool may be determined by the controller depending on the amount of loss of mass for the working tool. The higher the loss of mass, the shorter the remaining life cycle may be determined. Information identifying the remaining life cycle may be outputted to the user visually and / or acoustically.

For processing the sensor signals, the controller may be automatically operable to determine the loss of mass value from analyzing at least one of the sensor signals comprising the vibration pattern, and the reference sensor signals comprising the reference vibration pattern.

The working tool may be one of a plant cutting tool provided in a plant cutting unit configured for plant cutting, and a conditioning tool provided in a conditioning unit configured for conditioning of cut plant material. The agricultural plant cutting machine may be configured for plant cutting only, e.g. grass cutting, but not for conditioning of cut plant material. In an alternative embodiment, the agricultural plant cutting machine may be configured for both cutting of plants and conditioning of cut plant material. For example, a combined agricultural mower may be provided which is configured for grass cutting and conditioning cut grass material.

The assembly may comprise at least one of (i) a plurality of working tools each configured for at least one of cutting of plants and conditioning of cut plant material, wherein each working tool from the plurality of working tools is rotatably received on the tool carrier element; and (ii) a plurality of sensors each operable for detecting sensor signals identifying loss of mass for one or more working tools and outputting sensor signals representative thereof to the controller. Depending on the type of agricultural plant cutting machine, only one working tool or a plurality of working tools may be provided. The plurality of working tools may be hold by or attached to one or more tool carrier elements such as cutterbar. The working tools of the plurality of working tools may be of the same type of working tool or of different type such as disk tool, blade tool, or some other knife tool.

With respect to the plurality of sensors, in case a plurality of working tools is provided, each of the working tools may be assigned one or more sensors. Each working tool the same number of sensors (one or more) may be assigned. For example, one sensor may be provided per working tool. Having assigned one or more sensors to some specific working tool, may allow for detecting sensor signals which can be assigned to one or more working tools from the plurality of working tools. Such assignment of the sensor signals may be analysed by the controller for identifying one or more working tools with some specific loss of mass. For example, the wearing condition may be determined for such subset of working tools from the plurality of working tools only, while other working tools (another subset) from the plurality of working tools are determined not to be in wearing condition.

In general, the one or more sensors are operable for detecting sensor signals such as signals comprising vibration patterns identifying loss of mass for the working tool and outputting sensor signals representative thereof to the controller. The one or more sensors are provided with the assembly or the agricultural plant cutting machine. For example, the one or more sensors may be provided on the tool carrier element such as a cutterbar. Alternatively or in addition, one or more sensors may be provided on a holding member holding at least one of the tool carrier element and the working tool.

With regard to at least one of the controller and the sensor, a calibration may be performed prior to actually using the assembly for detecting the tool condition of the working tool. By the calibration a baseline of the sensor signals identifying loss of mass for the working tool may be set. A re-calibration may be performed at the time of replacing the working tool by a replacement working tool. Thereby, for example, an individual calibration may be applied for each different working tool, specifically for setting an individual baseline in dependence on the specific working tool.

The assembly may be provided on an implement which can be hooked to a tractor. In an alternative embodiment, the assembly may be attached to or hold by the tractor itself. Some self-propelling plant cutting machine may comprise the assembly.

The aspects disclosed above with regard the assembly may apply to at least one of the agricultural plant cutting machine and the method for detecting a tool condition of a working tool of an agricultural plant cutting machine *mutatis mutandis.*

### Description of further embodiments

Following, further embodiments, are disclosed referring to figures. In the figures, show:
- Fig. 1: a schematic representation of an assembly or system for detecting a tool condition of a working tool of an agricultural plant cutting machine;
- Fig. 2: a schematic representation of an assembly comprising a plurality of working tools of an agricultural plant cutting machine and a plurality of sensors assigned to the plurality of working tools;
- Fig. 3: a diagram depicting a vibrational pattern for a rotating working tool of an agricultural plant cutting machine;
- Fig. 4: a diagram depicting a vibrational pattern for the rotating working tool of the agricultural plant cutting machine identifying loss of mass;
- Fig. 5: a diagram depicting an amplitude of vibration signals in dependence on loss of mass for a working tool of an agricultural plant cutting machine; and
- Fig. 6: a diagram depicting a normalized root-mean-square value for the amplitude signal in Fig. 5 in dependence on loss of mass.

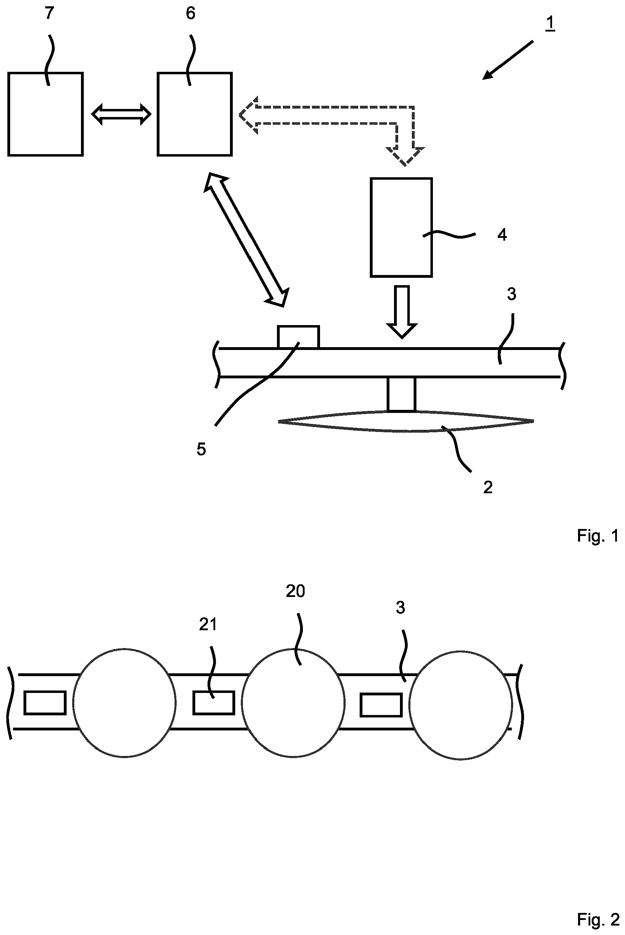

Fig. 1 shows a schematic representation of an assembly 1 for detecting a tool condition of a working tool 2 of an agricultural plant cutting machine. The assembly 1 may be provided, for example, in an agricultural mower comprising a cutting unit and optionally a conditioning unit or an agricultural harvester. The working tool 2 is rotatably received on or attached to a tool carrier element 3 which may be comprising a cutterbar. In the embodiment shown, the working tool 2 is provided by a disk element. In alternative embodiments, some other type of cutting element such as rotatable knife or blade may be provided.

The tool carrier element 3 and the working tool 2 may be provided on an implement which may be hooked to a tractor (not shown). In an alternative embodiment, the tool carrier element 3 holding the working tool 2 may be attached to or hold by the tractor itself.

A driving device 4 such as a motor is provided for rotating the working tool 2 in operation for plant cutting. On the tool carrier element 3 a sensor 5 is provided which is operable for detecting sensor signals identifying loss of mass for the working tool 2. In operation for plant cutting, the working tool 2 will be getting in contact with plants and potentially with obstacles. Such contact will lead to wearing of the working tool 2 leading to loss of mass for the working tool 2.

In an example, the sensor 5 is configured to detect a vibrational pattern or spectrum for vibrations of the tool carrier element 3, the vibrations triggered by operating, i.e. rotating the working tool 2 in operation.

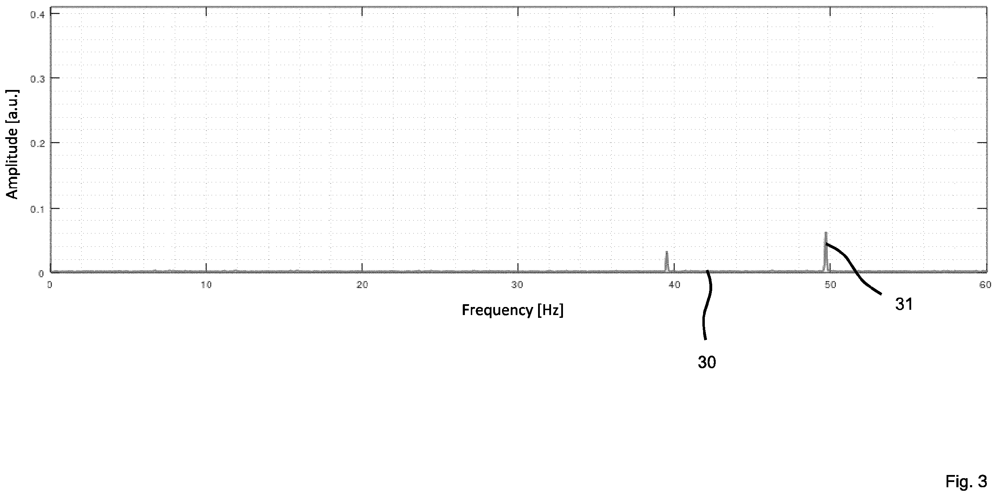

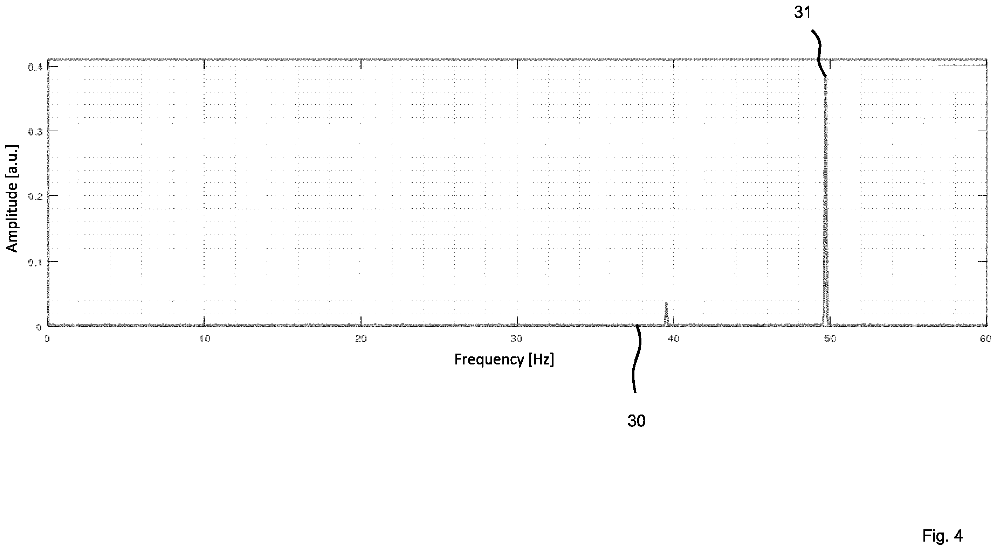

Fig. 3 and 4 show diagrams of a vibration pattern detected by the sensor 5. An amplitude signal 30 of the vibration signals detected is depicted in dependence on frequency. Amplitude 31 of the vibration signal at a frequency of 49,7Hz changes in case of loss of mass for the working tool 2. The amplitude 31 at 49,7Hz increases in case of loss of mass (see Fig. 4). The loss of mass identified by the increase of amplitude 31 shown in Fig. 3 and 4 was detected for a loss of mass of about 10 grams for the working tool 2.

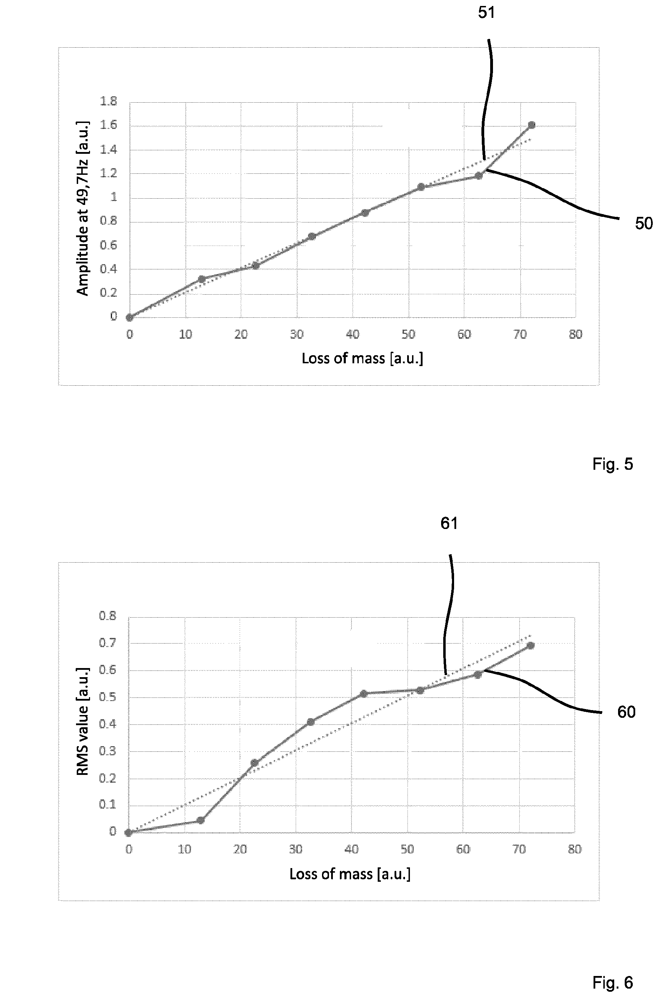

The amplitude 31 of the vibrational amplitude signal 30 at the frequency of 49,7Hz can be analyzed for identifying loss of mass as it is shown in Fig. 5 depicting the amplitude 31 at 49,7Hz in dependence on the loss of mass. As can be seen, curve 50 referring to a line connecting detected amplitude signals can be fitted by a straight line 51 defined by a linear equation of the type y = mx. Such curve characteristic is identifying some continuous loss of mass. It will allow for determining an absolute or relative amount of loss of mass over time.

The experimental results from Fig. 5 can be further analyzed by determining the root-mean-square value (RMS value) depicted in Fig. 6. The RMS curve 60 can be fitted by a straight line 61 also defined by a linear equation.

Referring to Fig. 1, the sensor signals detected by the sensor 5 may be transmitted to a controller 6 which, for example, may be provided on a tractor. In an alternative embodiment, the controller 6 may be provided on the implement comprising the tool carrier element 3 and the working tool 2. The controller 6 is automatically operable to determine the loss of mass for the working tool 2 from the sensor signals detected by the sensor 5, for example, according to the embodiment disclosed with reference to Fig. 3 to 6. In such case, the sensor 5 may be provided with an accelerator configured to detect vibration signals on the toll carrier element 3, such vibrations triggered by rotation of the working tool 2.

Fig. 2 shows a schematic representation of an arrangement of working tools 20 rotatably received on or attached to the tool carrier element 3. The plurality of working tools 20 is assigned a plurality of sensors 21, each of the sensors from the plurality of sensors 21 being automatically operable to detect sensor signals as described for sensor 5. In the arrangement shown, each of the working tools from the plurality of working tools 20 is assigned one of the sensors from the plurality of sensors 21 (single sensor assignment). The assigned sensor will detect sensor signals for the respective working tool. In an alternative embodiment, a single sensor may be assigned to more than one working tools. Also, it may be provided that each working tool from the plurality of working tools 20 is assigned more than one sensor from the plurality of sensors 21 (multiple sensor assignment).

The features disclosed in this specification, the figures and / or the claims may be material for the realization of various embodiments, taken in isolation or in various combinations thereof.

## Claims

1. An assembly, comprising:
- a working tool (2) of an agricultural plant cutting machine, the working tool (2) being configured for at least one of cutting plants and conditioning cut plant material, and rotatably received on a tool carrier element (3);
- a driving device (4) configured to rotate the working tool (2) in operation;
- a controller (6) operable for outputting signals to an output device (7); and
- a sensor operable for detecting sensor signals identifying loss of mass for the working tool (2) and outputting sensor signals representative thereof to the controller (6);
wherein the controller (6) is automatically operable for processing the sensor signals to identify the loss of mass for the working tool (2), and for outputting a status signal representative thereof to the output device (7), **characterized in that** the controller (6) is automatically operable for processing the sensor signals to determine a loss of mass value identifying an amount of loss of mass for the working tool (2), and to determine a wearing condition of the working tool (2), the wearing condition being caused by wearing of the working tool (2) due to operation for at least one of cutting of plants and conditioning of cut plant material.

2. Assembly of claim 1, wherein, for processing the sensor signals, the controller (6) is automatically operable to receive reference sensor signals identifying sensor signals for the working tool (2) with one of no loss of mass and previous loss of mass, and to compare the sensor signals to the reference sensor signals.

3. Assembly of claim 1 or 2, wherein the sensor is operable for detecting sensor signals comprising a vibration pattern identifying loss of mass for the working tool (2).

4. Assembly of claims 2 and 3, wherein, for processing the sensor signals, the controller (6) is automatically operable to receive reference sensor signals comprising reference vibration pattern identifying sensor signals with no loss of mass for the working tool (2), and to compare the sensor signals comprising the vibration pattern to the reference sensor signals comprising the reference vibration pattern for identifying the loss of mass the working tool (2).

5. Assembly of claim 3 or 4, wherein, for processing the sensor signals, the controller (6) is automatically operable to
- determine at least one of a root-mean-square value of the vibration pattern and a reference root-mean-square value of the reference vibration pattern; and
- determine the loss of mass from analyzing at least one of the root-mean-square value of the vibration pattern, and the reference root-mean-square value of the reference vibration pattern.

6. Assembly of at least one of the claims 3 to 5, wherein the sensor is configured for detecting sensor signals comprising vibration pattern for at least one of the tool carrier element (3), and the working tool (2).

7. Assembly of at least one of the preceding claims, wherein the sensor is operable for detecting the sensor signals during non-cutting operation of the working tool (2).

8. Assembly of at least one of the preceding claims, referring to at least claim 3 and / or claim 4, wherein, for processing the sensor signals, the controller (6) is automatically operable to determine the loss of mass value from analyzing at least one of the sensor signals comprising the vibration pattern, and the reference sensor signals comprising the reference vibration patterns.

9. Assembly of at least one of the preceding claims, wherein working tool (2) is one of a plant cutting tool provided in a plant cutting unit configured for plant cutting, and a conditioning tool provided in a conditioning unit configured for conditioning of cut plant material.

10. Assembly of at least one of the preceding claims, comprising at least one of
- a plurality of working tools (20) each configured for at least one of cutting of plants and conditioning of cut plant material, wherein each working tool from the plurality of working tools (20) is rotatably received on the tool carrier element (3) (3); and
- a plurality of sensors (21) each operable for detecting sensor signals identifying loss of mass for one or more working tools and outputting sensor signals representative thereof to the controller (6).

11. An agricultural plant cutting machine, comprising an assembly of at least one of the preceding claims.

12. A method for detecting a tool condition of a working tool (2) of an agricultural plant cutting machine, the agricultural plant cutting machine having a working tool (2) configured for at least one of cutting plants and conditioning cut plant material, wherein the working tool (2) is rotatably received on a tool carrier element (3); and a driving device configured to rotate the working tool (2) in operation,
wherein the method is comprising
- detecting sensor signals identifying loss of mass for the working tool (2) by a sensor;
- outputting sensor signals representative of the loss of mass by the sensor to a controller (6); and
- automatically operating the controller (6) for processing the sensor signals, for identify the loss of mass for the working tool (2), and for outputting a status signal representative thereof to the output device;
**characterized by** automatically operating the controller (6) for processing the sensor signals to determine a loss of mass value identifying an amount of loss of mass for the working tool (2), and to determine a wearing condition of the working tool (2), the wearing condition being caused by wearing of the working tool (2) due to operation for at least one of cutting of plants and conditioning of cut plant material.

## Patentansprüche

1. Anordnung, umfassend:
- ein Arbeitswerkzeug (2) einer landwirtschaftlichen Pflanzenschneidmaschine, wobei das Arbeitswerkzeug (2) zu wenigstens einem von Schneiden von Pflanzen und Konditionieren von geschnittenem Pflanzenmaterial eingerichtet ist und drehbar auf einem Werkzeugträgerelement (3) aufgenommen ist;
- eine Antriebsvorrichtung (4), die dazu eingerichtet ist, das Arbeitswerkzeug (2) im Betrieb zu drehen;
- eine Steuerung (6), die dazu betreibbar ist, Signale an eine Ausgabevorrichtung (7) auszugeben; und
- einen Sensor, der dazu betreibbar ist, Sensorsignale zu erfassen, die einen Massenverlust für das Arbeitswerkzeug (2) identifizieren, und Sensorsignale, die diesen repräsentieren, an die Steuerung (6) auszugeben;
wobei die Steuerung (6) automatisch dazu betreibbar ist, die Sensorsignale zu verarbeiten, um den Massenverlust für das Arbeitswerkzeug (2) zu identifizieren, und ein Statussignal, das diesen repräsentiert, an die Ausgabevorrichtung (7) auszugeben, **dadurch gekennzeichnet, dass** die Steuerung (6) automatisch dazu betreibbar ist, die Sensorsignale zu verarbeiten, um einen Massenverlustwert zu bestimmen, der eine Menge an Massenverlust für das Arbeitswerkzeug (2) identifiziert, und einen Verschleißzustand des Arbeitswerkzeugs (2) zu bestimmen, wobei der Verschleißzustand durch Verschleiß des Arbeitswerkzeugs (2) aufgrund des Betriebs für wenigstens eines von Schneiden von Pflanzen und Konditionieren von geschnittenem Pflanzenmaterial verursacht wird.

2. Anordnung nach Anspruch 1, wobei die Steuerung (6) zum Verarbeiten der Sensorsignale automatisch dazu betreibbar ist, Referenzsensorsignale zu empfangen, die Sensorsignale für das Arbeitswerkzeug (2) mit einem von keinem Massenverlust und vorherigem Massenverlust identifizieren, und die Sensorsignale mit den Referenzsensorsignalen zu vergleichen.

3. Anordnung nach Anspruch 1 oder 2, wobei der Sensor dazu betreibbar ist, Sensorsignale zu erfassen, die ein Vibrationsmuster umfassen, das einen Massenverlust für das Arbeitswerkzeug (2) identifiziert.

4. Anordnung nach Anspruch 2 und 3, wobei die Steuerung (6) zum Verarbeiten der Sensorsignale automatisch dazu betreibbar ist, Referenzsensorsignale zu empfangen, die ein Referenzvibrationsmuster umfassen, das Sensorsignale ohne Massenverlust für das Arbeitswerkzeug (2) identifiziert, und die Sensorsignale, die das Vibrationsmuster umfassen, mit den Referenzsensorsignalen zu vergleichen, die das Referenzvibrationsmuster umfassen, um den Massenverlust des Arbeitswerkzeugs (2) zu identifizieren.

5. Anordnung nach Anspruch 3 oder 4, wobei die Steuerung (6) zum Verarbeiten der Sensorsignale automatisch dazu betreibbar ist,
- wenigstens eines von einem quadratischen Mittelwert des Vibrationsmusters und einem quadratischen Referenzmittelwert des Referenzvibrationsmusters zu bestimmen; und
- den Massenverlust durch Analysieren wenigstens eines von dem quadratischen Mittelwert des Vibrationsmusters und dem quadratischen Referenzmittelwert des Referenzvibrationsmusters zu bestimmen.

6. Anordnung nach wenigstens einem der Ansprüche 3 bis 5, wobei der Sensor dazu eingerichtet ist, Sensorsignale zu erfassen, die ein Vibrationsmuster für wenigstens eines von dem Werkzeugträgerelement (3) und dem Arbeitswerkzeug (2) umfassen.

7. Anordnung nach wenigstens einem der vorhergehenden Ansprüche, wobei der Sensor dazu betreibbar ist, die Sensorsignale während eines nicht schneidenden Betriebs des Arbeitswerkzeugs (2) zu erfassen.

8. Anordnung nach wenigstens einem der vorhergehenden Ansprüche, bezogen auf wenigstens Anspruch 3 und/oder Anspruch 4, wobei die Steuerung (6) zum Verarbeiten der Sensorsignale automatisch dazu betreibbar ist, den Massenverlustwert durch Analysieren wenigstens eines von den Sensorsignalen, die das Vibrationsmuster umfassen, und den Referenzsensorsignalen, die die Referenzvibrationsmuster umfassen, zu bestimmen.

9. Anordnung nach wenigstens einem der vorhergehenden Ansprüche, wobei das Arbeitswerkzeug (2) eines von einem Pflanzenschneidwerkzeug, das in einer Pflanzenschneideinheit bereitgestellt ist, die zum Pflanzenschneiden eingerichtet ist, und einem Konditionierungswerkzeug ist, das in einer Konditionierungseinheit bereitgestellt ist, die zum Konditionieren von geschnittenem Pflanzenmaterial eingerichtet ist.

10. Anordnung nach wenigstens einem der vorhergehenden Ansprüche, umfassend wenigstens eines von
- einer Vielzahl von Arbeitswerkzeugen (20), die jeweils zu wenigstens einem von Schneiden von Pflanzen und Konditionieren von geschnittenem Pflanzenmaterial eingerichtet sind, wobei jedes Arbeitswerkzeug aus der Vielzahl von Arbeitswerkzeugen (20) drehbar auf dem Werkzeugträgerelement (3) (3) aufgenommen ist; und
- einer Vielzahl von Sensoren (21), die jeweils dazu betreibbar sind, Sensorsignale zu erfassen, die einen Massenverlust für ein oder mehrere Arbeitswerkzeuge identifizieren, und Sensorsignale, die diesen repräsentieren, an die Steuerung (6) auszugeben.

11. Landwirtschaftliche Pflanzenschneidmaschine, umfassend eine Anordnung nach wenigstens einem der vorhergehenden Ansprüche.

12. Verfahren zum Erfassen eines Werkzeugzustands eines Arbeitswerkzeugs (2) einer landwirtschaftlichen Pflanzenschneidmaschine, wobei die landwirtschaftliche Pflanzenschneidmaschine ein Arbeitswerkzeug (2) aufweist, das zu wenigstens einem von Schneiden von Pflanzen und Konditionieren von geschnittenem Pflanzenmaterial eingerichtet ist, wobei das Arbeitswerkzeug (2) drehbar auf einem Werkzeugträgerelement (3) aufgenommen ist; und eine Antriebsvorrichtung, die dazu eingerichtet ist, das Arbeitswerkzeug (2) im Betrieb zu drehen,
wobei das Verfahren umfasst
- Erfassen von Sensorsignalen, die einen Massenverlust für das Arbeitswerkzeug (2) identifizieren, durch einen Sensor;
- Ausgeben von Sensorsignalen, die den Massenverlust durch den Sensor repräsentieren, an eine Steuerung (6); und
- automatisches Betreiben der Steuerung (6) zum Verarbeiten der Sensorsignale, um den Massenverlust für das Arbeitswerkzeug (2) zu identifizieren, und zum Ausgeben eines Statussignals, das diesen repräsentiert, an die Ausgabevorrichtung;
**gekennzeichnet durch** automatisches Betreiben der Steuerung (6) zum Verarbeiten der Sensorsignale, um einen Massenverlustwert zu bestimmen, der eine Menge an Massenverlust für das Arbeitswerkzeug (2) identifiziert, und einen Verschleißzustand des Arbeitswerkzeugs (2) zu bestimmen, wobei der Verschleißzustand durch Verschleiß des Arbeitswerkzeugs (2) aufgrund des Betriebs für wenigstens eines von Schneiden von Pflanzen und Konditionieren von geschnittenem Pflanzenmaterial verursacht wird.

## Revendications

1. Ensemble, comprenant :
- un outil de travail (2) d'une machine de coupe de plantes agricoles, l'outil de travail (2) étant configuré pour au moins une des actions suivantes : couper des plantes et conditionner du matériel végétal coupé, et logé de manière de manière à pouvoir tourner sur un élément porte-outil (3) ;
- un dispositif d'entraînement (4) configuré pour faire tourner l'outil de travail (2) en fonctionnement ;
- un contrôleur (6) pouvant fonctionner pour émettre des signaux vers un dispositif de sortie (7) ; et
- un capteur fonctionnant pour détecter des signaux de capteur identifiant la perte de masse pour l'outil de travail (2) et pour émettre des signaux de capteur représentatifs de celle-ci vers le contrôleur (6) ;
le contrôleur (6) pouvant fonctionner automatiquement pour traiter les signaux de capteur afin d'identifier la perte de masse pour l'outil de travail (2), et pour délivrer un signal d'état représentatif de celle-ci au dispositif de sortie (7), **caractérisé en ce que** le contrôleur (6) peut fonctionner automatiquement pour traiter les signaux de capteur afin de déterminer une valeur de perte de masse identifiant une quantité de perte de masse pour l'outil de travail (2), et pour déterminer un état d'usure de l'outil de travail (2), l'état d'usure étant causé par l'usure de l'outil de travail (2) due au fonctionnement pour au moins une action parmi la coupe de plantes et/ou le conditionnement de la matière végétale coupée.

2. Ensemble selon la revendication de 1, dans lequel, pour traiter les signaux de capteur, le contrôleur (6) peut fonctionner automatiquement pour recevoir des signaux de capteur de référence identifiant des signaux de capteur pour l'outil de travail (2) avec l'une parmi une perte de masse nulle et une perte de masse antérieure, et pour comparer les signaux de capteur aux signaux de capteur de référence.

3. Ensemble selon la revendication 1 ou 2, dans lequel le capteur peut fonctionner pour détecter des signaux de capteur comprenant un modèle de vibration identifiant la perte de masse pour l'outil de travail (2).

4. Ensemble selon les revendications 2 et 3, dans lequel, pour traiter les signaux de capteur, le contrôleur (6) peut fonctionner automatiquement pour recevoir des signaux de capteur de référence comprenant un modèle de vibration de référence identifiant des signaux de capteur sans perte de masse pour l'outil de travail (2), et pour comparer les signaux de capteur comprenant le modèle de vibration de référence aux signaux de capteur comprenant le modèle de vibration de référence pour identifier la perte de masse de l'outil de travail (2).

5. Ensemble selon la revendication 3 ou 4, dans lequel, pour traiter les signaux de capteur, le contrôleur (6) peut fonctionner automatiquement pour
- déterminer au moins une valeur parmi une valeur quadratique moyenne du modèle de vibration et une valeur quadratique moyenne de référence du modèle de vibration de référence ; et
- déterminer la perte de masse en analysant au moins la valeur de la moyenne quadratique du modèle de vibration et la valeur de la moyenne quadratique de référence du modèle de vibration de référence.

6. Ensemble selon au moins l'une des revendications 3 à 5, dans lequel le capteur est configuré pour détecter des signaux de capteur comprenant un modèle de vibration pour au moins l'un de l'élément porte-outil (3) et de l'outil de travail (2).

7. Ensemble selon au moins l'une des revendications précédentes, dans lequel le capteur peut fonctionner pour détecter les signaux de capteur pendant le fonctionnement sans coupe de l'outil de travail (2).

8. Ensemble selon au moins l'une des revendications précédentes, se référant à au moins la revendication 3 et/ou la revendication 4, dans lequel, pour traiter les signaux de capteur, le contrôleur (6) peut fonctionner automatiquement pour déterminer la valeur de perte de masse à partir de l'analyse d'au moins un des signaux de capteur comprenant le modèle de vibration, et des signaux de capteur de référence comprenant les modèles de vibration de référence.

9. Ensemble selon au moins l'une des revendications précédentes, dans lequel l'outil de travail (2) est l'un d'un outil de coupe de plantes prévu dans une unité de coupe de plantes configurée pour couper des plantes, et d'un outil de conditionnement prévu dans une unité de conditionnement configurée pour conditionner la matière végétale coupée.

10. Ensemble selon au moins l'une des revendications précédentes, comprenant au moins l'une parmi
- une pluralité d'outils de travail (20) configurés chacun pour au moins une action parmi une coupe de plantes et/ou un conditionnement de matière végétale coupée, chaque outil de travail de la pluralité d'outils de travail (20) étant reçu de manière à pouvoir tourner sur l'élément porte-outil (3) ; et
- une pluralité de capteurs (21) fonctionnant chacun pour détecter des signaux de capteur identifiant une perte de masse pour un ou plusieurs outils de travail et émettant des signaux de capteur représentatifs de celle-ci vers le contrôleur (6).

11. Machine de coupe de plantes agricoles, comprenant un ensemble selon au moins l'une des revendications précédentes.

12. Procédé de détection d'un état d'outil d'un outil de travail (2) d'une machine de coupe de plantes agricoles, la machine de coupe de plantes agricoles comprenant un outil de travail (2) configuré pour au moins une des actions suivantes : coupe de plantes et conditionnement de matière végétale coupée, l'outil de travail (2) étant reçu de manière à pouvoir tourner sur un élément porte-outil (3) ; et un dispositif d'entraînement configuré pour faire tourner l'outil de travail (2) en fonctionnement,
le procédé comprenant
- la détection de signaux de capteur détectant la perte de masse de l'outil de travail (2) par un capteur ;
- la fourniture de signaux de capteur représentatifs de la perte de masse par le capteur à un contrôleur (6) ; et
- le fonctionnement automatique du contrôleur (6) pour le traitement des signaux des capteurs, pour l'identification de la perte de masse de l'outil de travail (2) et pour l'émission d'un signal d'état représentatif de celle-ci vers le dispositif de sortie ;
**caractérisé par** le fonctionnement automatique du contrôleur (6) pour traiter les signaux de capteur pour déterminer une valeur de perte de masse identifiant une quantité de perte de masse pour l'outil de travail (2), et pour déterminer un état d'usure de l'outil de travail (2), l'état d'usure étant provoqué par l'usure de l'outil de travail (2) due au fonctionnement pour au moins une action parmi une coupe de plantes et le conditionnement de la matière végétale coupée.
